Europäisches Patentamt

European Patent Office

Office européen des brevets

(11) Numéro de publication: **0 045 098**
**B1**

(12) **FASCICULE DE BREVET EUROPEEN**

(45) Date de publication du fascicule du brevet:
**09.05.84**

(51) Int. Cl.³: **C 21 B 7/08,** F 16 C 11/04,
F 16 J 15/50

(21) Numéro de dépôt: **81200651.8**

(22) Date de dépôt: **12.06.81**

(54) Articulation étanche d'une pièce oscillante dans un support.

(30) Priorité: **24.07.80 LU 82654**

(43) Date de publication de la demande:
**03.02.82 Bulletin 82/5**

(45) Mention de la délivrance du brevet:
**09.05.84 Bulletin 84/19**

(84) Etats contractants désignés:
**AT BE DE FR GB IT NL**

(56) Documents cités:
**DE - B - 2 024 190**
**DE - C - 625 591**
**FR - A - 1 243 229**
**FR - A - 1 285 035**
**FR - A - 1 399 905**
**FR - A - 1 458 488**
**GB - A - 649 179**

(73) Titulaire: **PAUL WURTH S.A., 32 rue d'Alsace,
L-1122 Luxembourg (LU)**

(72) Inventeur: **Mailllet, Pierre, 1 allée Drosbach, Howald (LU)**

(74) Mandataire: **Meyers, Ernest et al, c/o FREYLINGER &
ASSOCIES Postfach 1153, 46 rue du Cimetière,
Luxemburg (LU)**

ACTORUM AG

## Description

La présente invention concerne une articulation étanche d'une pièce oscillante dans un support, cette pièce étant pourvue d'une surface périphérique de forme sphérique coopérant avec la surface intérieure, de sphéricité correspondante, d'une garniture d'étanchéité solidaire dudit support, celui-ci étant monté dans une paroi séparant deux milieux se trouvant à des pressions différentes.

Ce genre d'articulation est bien connu et est couramment utilisé par exemple lorsqu'il s'agit de faire traverser la paroi d'une enceinte contenant un gaz sous pression par une tige de commande devant transmettre un certain genre de mouvement de l'extérieur vers l'intérieur, afin d'y actionner différents organes. La surface sphérique par laquelle cette tige est logée dans la paroi de l'enceinte lui permet d'effectuer des oscillations angulaires par rapport à cette paroi, alors que la garniture d'étanchéité épousant cette surface sphérique assure l'étanchéité de l'enceinte vis-à-vis de l'extérieur.

Ce genre d'articulation ne pose pas de gros problème pour des dimensions et des pressions relativement faibles. En revanche, les problèmes deviennent de plus en plus graves et de plus en plus fréquents au fur et à mesure que les dimensions et les pressions augmentent. Tel est le cas, par exemple, pour les tiges de commande servant à déplacer les cloches du gueulard d'un four à cuve. Ces problèmes proviennent du fait que les surfaces sphériques ont une double fonction, à savoir, d'une part, d'assurer l'étanchéité et, d'autre part, une fonction d'articulation et de soutien de la pièce traversant la paroi. Or, il n'existe pas de matériau pouvant assurer, de manière satisfaisante et en même temps, ces différentes fonctions, car les matériaux relativement mous utilisés pour assurer l'étanchéité ne sont pas en mesure de supporter, de manière acceptable, des sollicitations mécaniques élevées et vice versa. Pour résoudre ces problèmes — jusqu'à présent avec plus ou moins de succès — on a prévu des surfaces sphériques constituées d'une juxtaposition de matériaux différents susceptibles de remplir séparément l'une ou l'autre des fonctions exigées. Toutefois, cette conception des surfaces sphériques d'articulation et d'étanchéité augmente forcément la dimension de ces surfaces et, par conséquent, aggrave les problèmes à résoudre.

En outre, lorsque les forces agissant sur l'articulation deviennent importantes, comme c'est le cas dans l'exemple précité, il devient extrêmement difficile d'assurer l'étanchéité, surtout lorsque la différence entre les pressions des deux milieux de part et d'autre de l'articulation est importante. En effet, l'articulation et, plus particulièrement la surface sphérique extérieure, doit non seulement supporter le poids de la tige qui traverse l'articulation, mais également, d'un côté, le poids et la réaction de la pièce à actionner ou à soulever et, de l'autre côté, la force imposée à la tige pour soulever ou déplacer cette pièce. A ces forces s'ajoutent celles occasionnées par les différences de pression, et le cumul de ces forces et des effets de frottement a tendance à rendre l'action des joints d'étanchéité de plus en plus vulnérable.

Le but de la présente invention est de prévoir une nouvelle conception des articulations du genre précité, permettant de remplir, de manière satisfaisante, les différentes fonctions précitées, même pour des pressions et des dimensions élevées.

Pour atteindre cet objectif, l'articulation selon la présente invention est essentiellement caractérisée en ce que ledit support comporte, au moins partiellement, une section cylindrique sur la surface intérieure de laquelle est prévue ladite garniture d'étanchéité et sur la surface extérieure de laquelle sont prévus, à des endroits diamétralement opposés, deux tourillons coopérant avec deux branches latérales solidaires de ladite pièce.

Les deux tourillons permettent ainsi un pivotement de la pièce autour de l'axe commun des tourillons, c'est-à-dire une oscillation angulaire dans un seul plan.

Pour permettre également un pivotement dans un plan perpendiculaire audit plan, c'est-à-dire pour réaliser une articulation universelle, il suffirait de prévoir deux tourillons supplémentaires entre le support et la paroi. Ces tourillons supplémentaires seraient disposés en croix par rapport aux deux tourillons précités et le tout constituerait une articulation à cardan.

L'idée de base de l'invention réside dans la séparation de la fonction d'étanchéité, d'une part, et de la fonction d'articulation et de soutien, d'autre part. L'étanchéité est réalisée exclusivement au niveau de la surface sphérique grâce à la présence de la garniture d'étanchéité. En revanche, celle-ci n'exerce plus aucune fonction de support, fonction désormais réservée exclusivement aux tourillons.

Cette séparation des fonctions permet de réaliser l'étanchéité dans des conditions optimales et d'utiliser les matériaux appropriés à cet effet, sans être astreint aux nécessités d'articulation et de soutien. De même, on peut concevoir une articulation solide et résistante, pouvant subir les graissages nécessaires, sans avoir besoin de respecter les conditions nécessaires pour une fermeture étanche.

En outre, on peut réduire sensiblement le diamètre de la surface sphérique, ce qui entraîne non seulement une diminution du coût de fabrication, mais également une diminution des forces et sollicitations auxquelles est exposée l'articulation par suite de la différence entre les pressions régnant de part et d'autre.

D'autres particularités et caractéristiques ressortiront de la description détaillée d'un mode de réalisation présenté ci-dessous, à titre d'exemple non limitatif, en référence aux dessins annexés, dans lesquels:

la fig. 1 montre une coupe schématique à travers une articulation selon l'invention, et

la fig. 2 montre une vue schématique de l'articulation dans une direction perpendiculaire à celle de la coupe selon la fig. 1.

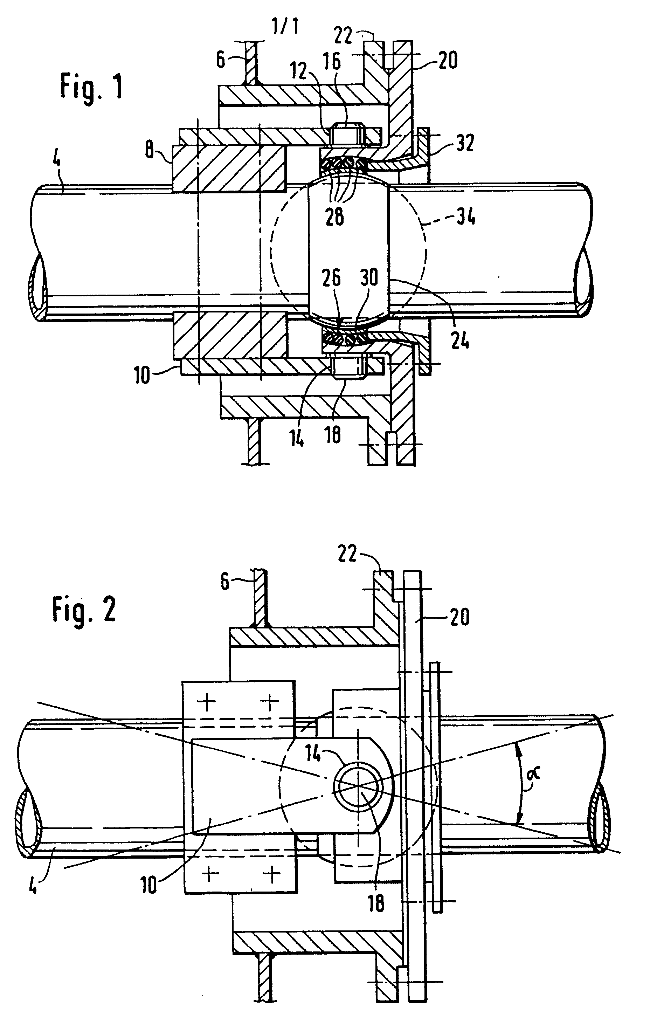

Sur les fig. 1 et 2, la référence 4 désigne une pièce constituée sous forme d'un tube cylindrique traversant une paroi 6 d'une enceinte contenant un fluide sous pression. Dans l'exemple représenté, l'intérieur de l'enceinte se trouve du côté gauche de la paroi 6, alors que l'extérieur, sous pression atmosphérique, se trouve du côté droit. Le passage doit donc être effectué en respectant les conditions d'étanchéité pour éviter les fuites de l'intérieur vers l'extérieur. En outre, la pièce 4 doit pouvoir effectuer dans un plan vertical un pivotement dont l'amplitude est représentée par l'angle α sur la fig. 2.

En supposant que ce pivotement s'effectue dans le plan vertical, la fig. 1 représente donc une coupe horizontale à travers cette articulation. Sur cette fig. 1, on voit plus particulièrement que la pièce 4 est pourvue de deux branches latérales 8 et 10, chacune pourvue d'un alésage 12, 14, ces alésages 12 et 14 coopérant respectivement avec des tourillons 16 et 18 prévus à des endroits diamétralement opposés sur un support 20. Ce support 20 qui s'étend tout autour de la pièce 4 est rendu solidaire, par exemple par boulonnage, d'une bride 22 faisant partie de la paroi 6.

Grâce à ce montage, les tourillons 16 et 18 supportent la pièce 4 tout en permettant son pivotement autour de l'axe commun 0 de ces deux tourillons 16 et 18, ce pivotement étant matérialisé par l'angle α sur la fig. 2.

En vue d'assurer l'étanchéité, sans pour autant gêner le pivotement de la pièce 4, celle-ci est pourvue d'un collier 24 en forme de zone sphérique. Ce collier 24 coopère avec une garniture d'étanchéité 26, de sphéricité correspondant à celle de la zone 24 et coincée entre un rebord radial du support 20 et un presse-étoupe 32 à l'intérieur de ce support 20. La garniture d'étanchéité 26 est constituée, de manière connue en soi, par plusieurs joints juxtaposés 28. La référence 30 indique schématiquement une bague 30 facultative pouvant servir au graissage et à l'introduction d'un lubrifiant. La référence 34 indique schématiquement en traits interrompus la courbure commune du collier 24 et de la garniture d'étanchéité 26.

Au lieu de fixer le support 20 directement sur la bride 22, il est possible de prévoir deux tourillons supplémentaires sur ce support 20. Ces tourillons supplémentaires seraient disposés en croix par rapport aux deux tourillons illustrés sur les figures et coopéreraient avec une pièce intermédiaire fixée sur la bride 22. Cela permettrait un pivotement du support 20 et, par conséquent, de la pièce 4 dans un plan perpendiculaire à celui du pivotement rendu possible par les tourillons 16 et 18. Autrement dit, on réaliserait une articulation universelle grâce à laquelle la pièce 4 pourrait pivoter dans deux directions.

Comme le montre la fig. 1, on peut donner au presse-étoupe 32 une forme légèrement divergente vers l'extérieur, de façon à ne pas gêner le mouvement oscillant de la pièce 4 et pour augmenter l'amplitude de l'angle de pivotement.

## Revendications

1. Articulation étanche d'une pièce oscillante (4) dans un support (20), cette pièce (4) étant pourvue d'une surface périphérique (24) de forme sphérique coopérant avec la surface intérieure de sphéricité correspondante (34), d'une garniture d'étanchéité (26) solidaire dudit support (20), celui-ci étant monté dans une paroi (6) séparant deux milieux se trouvant à des pressions différentes, caractérisée en ce que ledit support (20) comporte, au moins partiellement, une section cylindrique sur la surface intérieure de laquelle est prévue ladite garniture d'étanchéité (26) et sur la surface extérieure de laquelle sont prévus, à des endroits diamétralement opposés, deux tourillons (16) (18), coopérant avec deux branches latérales (8) (10) solidaires de ladite pièce (4).

2. Articulation selon la revendication 1, caractérisée en ce que la garniture d'étanchéité (26) est coincée entre un rebord radial du support (20) et un presse-étoupe (32).

3. Articulation selon la revendication 2, caractérisée en ce que la garniture d'étanchéité (26) est constituée de plusieurs joints circulaires (28) juxtaposés.

4. Articulation selon l'une des revendications 2 ou 3, caractérisée en ce que la garniture d'étanchéité (26) comporte également un dispositif de lubrification (30).

5. Articulation selon la revendication 2, caractérisée en ce que le presse-étoupe (32) possède un bord extérieur divergent.

6. Articulation selon l'une quelconque des revendications précédentes, caractérisée par deux tourillons supplémentaires prévus entre le support (20) et une pièce intermédiaire solidaire de la paroi, ces tourillons supplémentaires étant disposés en croix par rapport aux deux premiers tourillons (16) (18).

## Patentansprüche

1. Dichte Verbindung eines oszillierenden Teiles (4) in einer Halterung (20), wobei dieser Teil (4) eine periphere Oberfläche (24) von sphärischer Form aufweist, welche mit der inneren Fläche von entsprechender Kugelform (24) einer Dichtliderung (26) an der genannten Halterung (20) zusammenwirkt und letztere in einer Wandung (6) montiert ist, welche zwei, unter unterschiedlichem Druck stehende Milieus von einander trennt, dadurch gekennzeichnet, dass die genannte Halterung (20), zumindest teilweise, einen zylindrischen Abschnitt aufweist, an dessen Innenfläche die genannte Dichtliderung (26) vorgesehen ist und an dessen Aussenfläche, an diametral entgegengesetzten Stellen, zwei Zapfen (16, 18) vorgesehen sind, welche mit zwei seitlichen, mit dem genannten Teil (4) einstückigen Armen (8, 10) zusammenwirken.

2. Verbindung nach Anspruch 1, dadurch gekennzeichnet, dass die Dichtliderung (26) zwischen einem radialen Bord der Halterung (20) und einer Stopfbüchse (32) eingeklemmt ist.

3. Verbindung nach Anspruch 2, dadurch gekennzeichnet, dass die Dichtliderung (26) aus mehreren, aneinander gereihten kreisförmigen Dichtungen (28) besteht.

4. Verbindung nach den Ansprüchen 2 und 3, dadurch gekennzeichnet, dass die Dichtliderung (26) ebenfalls eine Schmiervorrichtung (30) umfasst.

5. Verbindung nach Anspruch 2, dadurch gekennzeichnet, dass die Stopfbüchse (32) einen äusseren divergierenden Rand aufweist.

6. Verbindung nach den Ansprüchen 1 bis 5, gekennzeichnet durch zwei zusätzliche Zapfen zwischen der Halterung (20) und einem mit der Wandung einstückigen Zwischenstück, wobei diese zusätzlichen Zapfen in bezug zu den beiden ersten Zapfen (16, 18) kreuzförmig angeordnet sind.

## Claims

1. Tight joint of an oscillating piece (4) in a support (20), the said piece (4) having a peripheral surface (24) of spherical shape cooperating with the internal surface, of corresponding spherical shape (34), of a tight packing (26) integral with the said support (20), the latter being mounted in a wall (6) separating two media at different pressures, characterized by the fact that the said support (20) includes at least partially a cylindrical section on the internal surface of which is provided the said tight packing (26) and on the external surface of which are provided, in diametrically opposite positions, two journals (16, 18) cooperating with two lateral branches (8, 10) integral with the said piece (4).

2. Joint in accordance with Claim 1, characterized by the fact that the tight packing (26) is wedged between a radial rim of the support (20) and a stuffing box (32).

3. Joint in accordance with Claim 2, characterized by the fact that the tight packing (26) consists of a number of juxtaposed circular joints (28).

4. Joint in accordance with either of Claims 2 and 3, characterized by the fact that the tight packing (26) also comprises a lubricating device (30).

5. Joint in accordance with Claim 2, characterized by the fact that the stuffing box (32) has a divergent external edge.

6. Joint in accordance with any one of the preceding claims, characterized by two supplementary journals provided between the support (20) and an intermediate piece integral with the wall, these supplementary journals being positioned crosswise in relation to the first two journals (16, 18).

Fig. 1

Fig. 2